# EUROPEAN PATENT APPLICATION

(11) **EP 3 107 355 A1**
(43) Date of publication of application: **21.12.2016**
(21) Application number: 16170687.4
(22) Date of filing: 20.05.2016
(51) Int. Cl.: H05B 37/02

(54) **WIRED AND WIRELESS CONTROL SYSTEM AND DATA BRIDGE METHOD THEREOF**

(30) Priority: 18.06.2015 TW 104119829
(71) Applicant: Hep Tech Co. Ltd., 408 Taichung City (TW)
(72) Inventor: CHEN, Po-Yen, 11670 Taipei City (TW); HUNG, Ta-Sheng, 408 Taichung City (TW); LIU, Chen-Yu, 406 Taichung City (TW)
(74) Representative: Lermer, Christoph

(57) **Abstract**

A wired and wireless control system may include a plurality of control devices (12A, 12B, 12C), a lighting control network (10) and a plurality of gateways (11A, 11B, 11C). Each of the control devices (12A, 12B, 12C) may wirelessly transmit a control signal (SA, SB, SC) corresponding to its communication protocol. The lighting control network (10) may include a plurality of lighting devices (102A, 102B, 102C), and these lighting devices may be coupled to one another via the internal wiring (IW) of the lighting control network (10); besides, each lighting device (102A, 102B, 102C) may receive the control signal (SA, SC, SB) corresponding to its communication protocol, and then transmit the control signal to another lighting device to convert the control signal into a conversion signal corresponding to its communication protocol. Each of the gateways (11A, 11B, 11C) may be coupled to at least one controlled device (A, B, C) and receive the conversion signal corresponding to its communication protocol in order to control the at least one controlled device (A, B, C).

## Description

This application also claims priority to Taiwan Patent Application No. 104119829 filed in the Taiwan Patent Office on June 18, 2015, the entire content of which is incorporated herein by reference.

### TECHNICAL FIELD

The present invention relates to a control system, in particular to a wired & wireless control system. The present invention furthers relates to a data bridge method of the control system.

### BACKGROUND

Internet of Things (IoT) is a network based on Internet, conventional telecommunication network, which is capable of connecting all devices with one another. In general, IoT can be realized by wireless network; as IoT can swiftly and efficiently control and manage machines, equipment and employees , IoT has become a future trend.

As described above, so as to realize the concept of IoT, the conventional control system should control needs wireless network to control a controlled device. In order to control the controlled device via wireless network, the user should use a control device to wirelessly transmit a control signal to the gateway connected to the controlled device so as to control the controlled device; besides, the communication protocol of the controlled device should be the same with that of the gateway.

However, different users may use different control devices, and these control devices may also use different communication protocols. Accordingly, for the purpose of allowing these users to control the controlled device, the controlled device should be connected to many gateways with different communication protocols so as to make sure all control devices can control the controlled device. Unfortunately, the prices of the gateways are quite high, which will significantly increase the cost of the conventional control system.

Therefore, it has become an important issue to provide a control system capable of improving the shortcomings of the conventional control system.

### SUMMARY

The present invention is related to a wired & wireless control system. In one embodiment of the invention, the wired & wireless control system may include a plurality of control devices, a lighting control network and a plurality of gateways. Each of the control devices may wirelessly transmit a control signal corresponding to its communication protocol. The lighting control network may include a plurality of lighting devices, and these lighting devices may be coupled to one another via the internal wiring of the lighting control network; besides, each lighting device may receive the control signal corresponding to its communication protocol, and then transmit the control signal to another lighting device to convert the control signal into a conversion signal corresponding to its communication protocol. Each of the gateways may be coupled to at least one controlled device and receive the conversion signal corresponding to its communication protocol in order to control the at least one controlled device.

The present invention is further related to a data bridge method using a lighting control network as a data bridge path, where the lighting control network may include a plurality of lighting devices, and the lighting devices may be coupled to one another via an internal wiring. In another embodiment of the invention, the data bridge method may include the following steps: wirelessly transmitting a control signal by any one of the control devices, the control signal being corresponding to the control device's communication protocol; receiving the control signal by one lighting device with the communication protocol corresponding to the communication protocol of the control signal, and transmitting the control signal from the lighting device to another lighting device via the internal wiring so as to convert the control signal into a conversion signal corresponding to the communication protocol of the light device receiving the control signal from the internal wiring; and receiving the conversion signal by one of a plurality of gateways corresponding to the communication protocol of the conversion signal so as to control at least one controlled device.

In a preferred embodiment of the present invention, each of the lighting devices may a wireless communication module, and each of the lighting devices may receive the control signal corresponding to the lighting device's communication protocol.

In a preferred embodiment of the present invention, the lighting control network may be based on a DALI protocol.

In a preferred embodiment of the present invention, each of the lighting devices may further include a lighting module and a power conversion module; the lighting module may be coupled to the power conversion module, and the power conversion module may be coupled to the wireless communication module via a plug-and-play interface.

In a preferred embodiment of the present invention, the plug-and-play interface may be a USB interface.

In a preferred embodiment of the present invention, the communication protocols of the wireless communication modules may include one or more than one of the Infrared communication protocol, the WIFI communication protocol, the ZigBee communication protocol and the Bluetooth communication protocol.

In a preferred embodiment of the present invention, the power conversion module may be electrical ballast.

In a preferred embodiment of the present invention, the power conversion module may be a LED driver.

In a preferred embodiment of the present invention, the communication protocols of the control devices may include one or more than one of the Infrared communication protocol, the WIFI communication protocol, the ZigBee communication protocol and the Bluetooth communication protocol.

In a preferred embodiment of the present invention, the lighting modules may be gas discharging lamps.

In a preferred embodiment of the present invention, the lighting modules may be LED lamps.

In a preferred embodiment of the present invention, the communication protocols of the gateways may include one or more than one of the Infrared communication protocol, the WIFI communication protocol, the ZigBee communication protocol and the Bluetooth communication protocol.

In a preferred embodiment of the present invention, the gas discharging lamps may be mercury lamps, metal halide lamps, sodium lamps, fluorescent lamps, xenon lamps.

Further scope of applicability of the present application will become more apparent from the detailed description given hereinafter. However, it should be understood that the detailed description and specific examples, while indicating exemplary embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention and wherein:
FIG. 1 is the schematic view of the first embodiment of the wired & wireless control system in accordance with the present invention.
FIG. 2 is the flow chart of the first embodiment of the wired & wireless control system in accordance with the present invention.
FIG. 3 is the schematic view of the second embodiment of the wired & wireless control system in accordance with the present invention.
FIG. 4 is the first schematic view of the third embodiment of the wired & wireless control system in accordance with the present invention.
FIG. 5 is the second schematic view of the third embodiment of the wired & wireless control system in accordance with the present invention.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

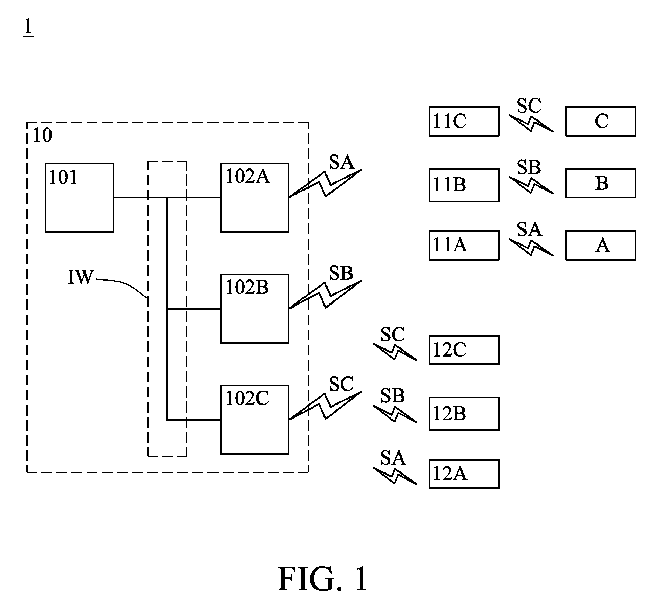

Please refer to FIG. 1, which is the schematic view of the first embodiment of the wired & wireless control system in accordance with the present invention. As shown in FIG. 1, the wired & wireless control system 1 may include a plurality of control devices 12A, 12B, 12C, a lighting control network 10, a plurality of gateways 11A, 11B, 11C and a plurality of controlled devices A, B, C.

The control device 12A may wirelessly transmit the control signal SA corresponding to its communication protocol. The control device 12B may wirelessly transmit the control signal SB corresponding to its communication protocol. The control devices 12C may wirelessly transmit the control signal SC corresponding to its communication protocol.

The lighting control network 10 may include the lighting control device 101 and a plurality of lighting devices 102A, 102B, 102C; the lighting control device 101 and the lighting devices 102A, 102B, 102C may be coupled to one another via the internal wiring IW, so the lighting control device 101 can control the lighting devices 102A, 102B, 102C. The lighting device 102A may receive the control signal SA corresponding to its communication protocol, and can transmit the control signal SA to the lighting device 102B or the lighting device 102C via the internal wiring IW; then, the lighting device 102B may convert the control signal SA into the control signal SB (conversion signal) corresponding to its communication protocol, or the lighting device 102C may convert the control signal SA into the control signal SC (conversion signal) corresponding to its communication protocol. Similarly, the lighting device 102B may receive the control signal SB corresponding to its communication protocol, and can transmit the control signal SB to the lighting device 102A or the lighting device 102C via the internal wiring IW; then, the lighting device 102A may convert the control signal SB into the control signal SA (conversion signal) corresponding to its communication protocol, or the lighting device 102C may convert the control signal SB into the control signal SC (conversion signal) corresponding to its communication protocol. Similarly, the lighting device 102C may receive the control signal SC corresponding to its communication protocol, and can transmit the control signal SC to the lighting device 102A or the lighting device 102B via the internal wiring IW; then, the lighting device 102A may convert the control signal SC into the control signal SA (conversion signal) corresponding to its communication protocol, or the lighting device 102B may convert the control signal SC into the control signal SB (conversion signal) corresponding to its communication protocol. In a preferred embodiment, each of the lighting devices 102A, 102B, 102C may include a lighting module, a power conversion module and a wireless communication module.

The gateways 11A may be coupled to the controlled devices A, and may receive the control signal SA corresponding to its communication protocol from the lighting device 102A so as to control the controlled device A. The gateways 11B may be coupled to the controlled devices B, and may receive the control signal SB corresponding to its communication protocol from the lighting device 102B so as to control the controlled device B. The gateways 11C may be coupled to the controlled devices C, and may receive the control signal SC corresponding to its communication protocol from the lighting device 102C so as to control the controlled device C. In a preferred embodiment, the communication protocols of the lighting devices 102A, 102B, 102C, the control device 12A, 12B,12C and the gateways 11A, 11B, 11C may include the Infrared communication protocol, the WIFI communication protocol, the ZigBee communication protocol and the Bluetooth communication protocol, etc.

As described above, the control signal SA of the control device 12A may be received by the corresponding lighting device 102A, and transmitted to another lighting device 102B or 102C via the internal wiring IW, and then converted into the control signal SB or SC so as to control the controlled device B or C; similarly, the control signal SB of the control device 12B may be received by the corresponding lighting device 102B, and transmitted to another lighting device 102A or 102C via the internal wiring IW, and then converted into the control signal SA or SC so as to control the controlled device A or C; similarly, the control signal SC of the control device 12C may be received by the corresponding lighting device 102C, and transmitted to another lighting device 102A or 102B via the internal wiring IW, and then converted into the control signal SA or SB so as to control the controlled device A or B.

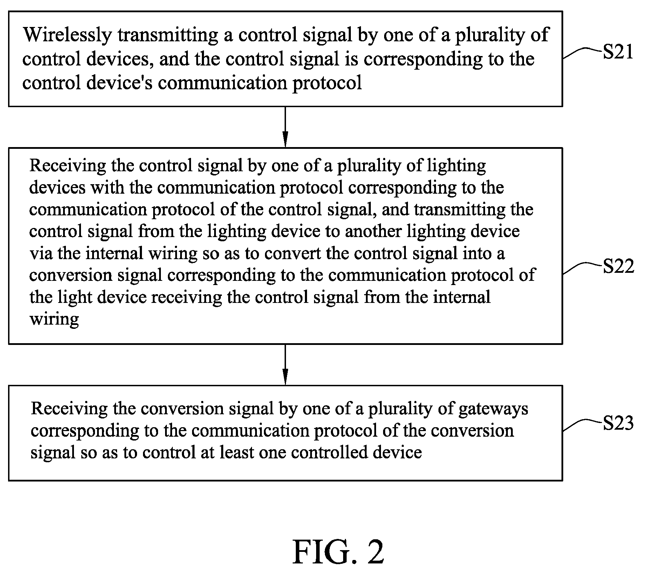

Please refer to FIG. 2, which is the flow chart of the first embodiment of the wired & wireless control system in accordance with the present invention. The embodiment may include the following steps:
Step S21: Wirelessly transmitting a control signal by one of a plurality of control devices, and the control signal is corresponding to the control device's communication protocol.
Step S22: Receiving the control signal by one of a plurality of lighting devices with the communication protocol corresponding to the communication protocol of the control signal, and transmitting the control signal from the lighting device to another lighting device via the internal wiring so as to convert the control signal into a conversion signal corresponding to the communication protocol of the light device receiving the control signal from the internal wiring.
Step S23: Receiving the conversion signal by one of a plurality of gateways corresponding to the communication protocol of the conversion signal so as to control at least one controlled device.

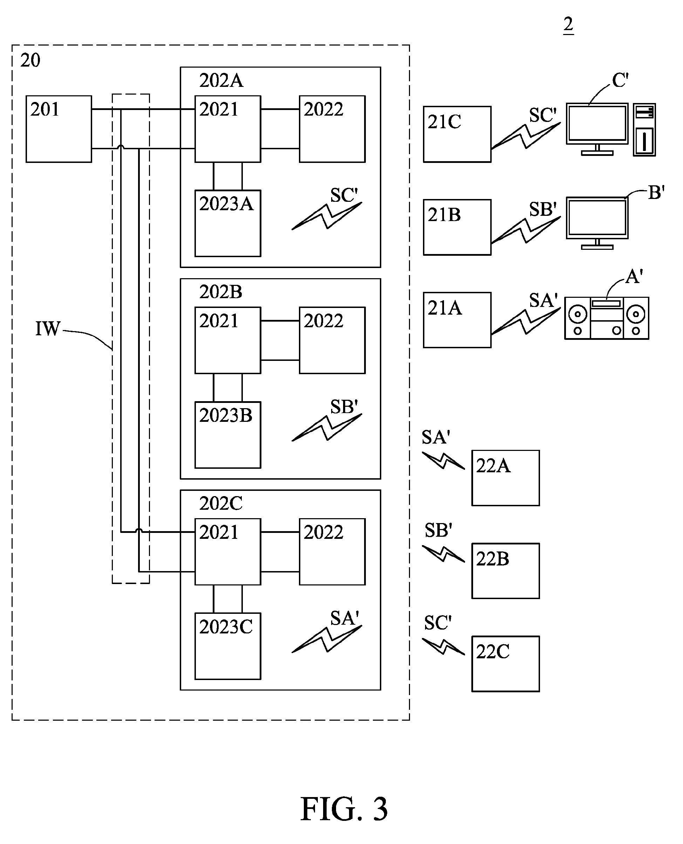

Please refer to FIG. 3, which is the schematic view of the second embodiment of the wired & wireless control system in accordance with the present invention. As shown in FIG. 3, the wired & wireless control system 2 may include a plurality of control devices 22A, 22B, 22C, a lighting control network 20, a plurality of gateways 21A, 21B, 21C and a plurality of controlled devices, the computer C', the television B' and the stereo system A'.

The WIFI control device 22A may wirelessly transmit the WIFI control signals SA' based on WIFI communication protocol. The Bluetooth control device 22B may wirelessly transmit the Bluetooth control signal SB' based on Bluetooth communication protocol. The ZigBee control devices 22C may wirelessly transmit the ZigBee control signals SC' based on ZigBee communication protocol.

The lighting control network 20 may be based on Digital Addressable Lighting Interface (DALI) protocol, which may include the LED lighting control device 201 and a plurality of LED lighting devices 202A, 202B, 202C; the LED lighting control device 201 and the LED lighting devices 202A, 202B, 202C may be coupled to one another via the internal wiring IW, so the LED lighting control device 201 can control the LED lighting devices 202A, 202B, 202C. The LED lighting device 202A may include a power conversion module, a lighting module and a WIFI wireless communication module 2023A; in the embodiment, the power conversion module may be a LED driver 2021, and the lighting module may be a LED lamp 2022; the LED lamp 2022 may be coupled to the LED driver 2021, and the LED driver 2021 may be coupled to the WIFI wireless communication module 2023A via a plug-and-play interface, where the plug-and-play interface may be a USB interface. Similarly, the LED lighting device 202B may include a LED driver 2021, a LED lamp 2022 and a Bluetooth wireless communication module 2023B; the LED lighting device 202C may include a LED driver 2021, a LED lamp 2022 and a ZigBee wireless communication module 2023C. In another preferred embodiment, the LED lighting devices 202A, 202B, 202C may be gas discharging lamps, and each of which may include an electrical ballast, a gas discharging lamp and a wireless communication module; the gas discharging lamps may be mercury lamps, metal halide lamps, sodium lamps, fluorescent lamps, xenon lamps, etc.

The LED lighting device 202A may receive the WIFI control signal SA' based on WIFI communication protocol via its WIFI wireless communication module 2023A, and can transmit the WIFI control signal SA' to the LED lighting device 202B or the LED lighting device 202C via the internal wiring IW; then, the Bluetooth wireless communication module 2023B of the LED lighting device 202B may convert the WIFI control signal SA' into the Bluetooth control signal SB', or the ZigBee wireless communication module 2023C of the lighting device 202C may convert the WIFI control signal SA' into the ZigBee control signal SC'. Similarly, the LED lighting device 202B may receive the Bluetooth control signal SB' based on Bluetooth communication protocol via its Bluetooth wireless communication module 2023B , and the Bluetooth control signal SB' may be converted into the WIFI control signal SA' or the ZigBee control signal SC' via the same process. Similarly, the LED lighting device 202C may receive the ZigBee control signal SC' based on ZigBee communication protocol via its ZigBee wireless communication module 2023C , and the ZigBee control signal SC' may be converted into the WIFI control signal SA' or the Bluetooth control signal SB' via the same process.

The WIFI gateway 21A may be coupled to the stereo system A', and may receive the WIFI control signal SA' from the WIFI wireless communication module 2023A of the LED lighting device 202A so as to control the stereo system A'. The Bluetooth gateway 21B may be coupled to the television B', and may receive the Bluetooth control signal SB' from the Bluetooth wireless communication module 2023B of the LED lighting device 202B so as to control the television B'. The ZigBee gateway 21C may be coupled to the computer C', and may receive the ZigBee control signal SC' from the ZigBee wireless communication module 2023C of the LED lighting device 202C so as to control the computer C'. Of course, each of the above gateways 21A, 21B, 21C may be coupled to several devices rather than one only one device.

By means of the above design, the WIFI control signal SA' of the WIFI control device 22A may be received by the corresponding LED lighting device 202A, and transmitted to another lighting device 202B or 202C via the internal wiring IW, and then converted into the Bluetooth control signal SB' or the ZigBee control signal SC' so as to control television B' or computer C'; similarly, the Bluetooth control signal SB' of the Bluetooth control device 22B may be received by the corresponding LED lighting device 202B, and transmitted to another LED lighting device 202A or 122C via the internal wiring IW, and then converted into the WIFI control signal SA' or ZigBee control signal SC' so as to control the stereo system A' or computer C'; similarly, the ZigBee control signal SC' of the ZigBee control device 22C may be received by the corresponding LED lighting device 202C, and transmitted to another LED lighting device 202A or 202B, and then converted into the WIFI control signal SA' or the Bluetooth control signal SB' so as to control the stereo system A' or television B'. In this way, each of the controlled devices A', B', C' does not need to be coupled to several gateways with different communication protocols, but the user can still use any one of the control devices 22A, 22B, 22C to control any one of the controlled devices A', B', C' via the gateways 21A, 21B, 21C; accordingly, the quantity of the gateways of the wired & wireless control system 2 can be significantly reduced, so the cost of the wired & wireless control system 2 can be much lower.

For example, when the user wants to use the ZigBee control device 22C to control the stereo system A' coupled to the WIFI gateway 21A, the user can use the ZigBee control device 22C to transmit the ZigBee control signal SC' to the ZigBee wireless communication module 2023C of the LED lighting device 202C, and the ZigBee control signal SC' can be transmitted to the WIFI wireless communication module 2023A of the LED lighting device 202A; then, WIFI wireless communication module 2023A can convert the ZigBee control signal SC' into the WIFI control signal SA', and the transmit the WIFI control signal SA' to the WIFI gateway 21A so as to control the stereo system A'. In this way, the user can use the ZigBee control device 22C based on the ZigBee communication protocol to control the stereo system A' even if the stereo system A' fails to be coupled to the ZigBee gateway 21C.

It is worthy to point out that if a user wants to control a controlled device via different communication protocols in the conventional control system, the controlled device should be connected to many gateways corresponding to different communication protocols at a time; therefore, the cost of the conventional control system will be significantly increased. On the contrary, according to one embodiment of the present invention, the control signal of any one of the control devices of the wired & wireless control system can be converted into the conversion signal corresponding to the communication protocol of any one of the gateways via the wireless communication module of one of the lighting devices so as to control any one of the controlled devices; thus, each of the controlled devices only needs to be coupled to one gateway, which can significantly reduce the quantity of the gateways and the cost of the wired & wireless control system can be also significantly reduced.

Besides, according to one embodiment of the present invention, the wired & wireless control system can use the original lighting control network as the data bridge path without any additional network, so the cost of the wired & wireless control system can be further decreased.

Further, according to one embodiment of the present invention, the wired & wireless control system can use the original lighting control network as the data bridge path, so the utilization rate of the lighting control network can be increased; in this way, the lighting control network idle for most of the time can be more effectively utilized.

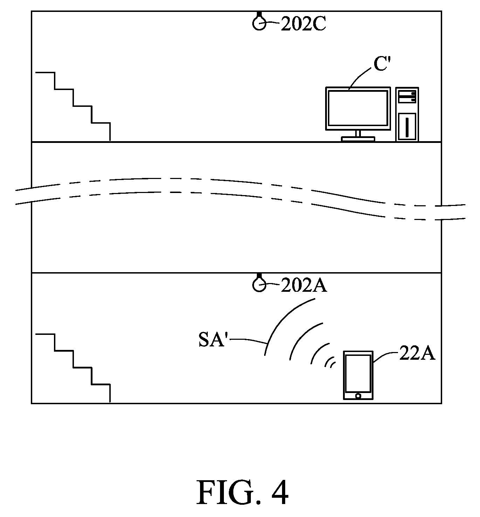

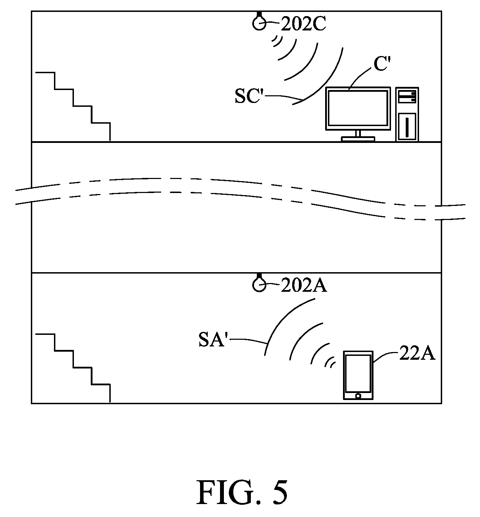

Please refer to FIG. 4 and FIG. 5, which are the first schematic view and the second schematic view of the third embodiment of the wired & wireless control system in accordance with the present invention. As shown in FIG. 4, when a user wants to use a WIFI control device 22A to remotely control a computer C' coupled to a ZigBee gateway, the user can use the WIFI control device 22A to transmit the WIFI control signal SA' to the WIFI wireless communication module of a LED lighting device 202A, and the internal wiring of the lighting control network can serve as the data bridge path to transmit the WIFI control signal SA' to the ZigBee wireless communication module of the LED lighting device 202C.

As shown in FIG. 5, the ZigBee wireless communication module of the LED lighting device 202C can convert the WIFI control signal SA' into the ZigBee control signal SC', and then transmit the ZigBee control signal SC' to the ZigBee gateway so as to control the computer C'.

In summation of the description above, the wired & wireless control and the data bridge method thereof in accordance with the embodiments of the present invention may have the following advantages:
(1) According to one embodiment of the present invention, the control signal of any one of the control devices of the wired & wireless control system can be converted into the conversion signal corresponding to the communication protocol of any one of the gateways via the wireless communication module of one of the lighting devices so as to control any one of the controlled devices; thus, each of the controlled devices does not need to be coupled to several gateways with different communication protocols, which can significantly reduce the quantity of the gateways and the cost of the wired & wireless control system can be significantly reduced.
(2) According to one embodiment of the present invention, the wired & wireless control system can use the original lighting control network as the data bridge path without any additional network, so the cost of the wired & wireless control system can be further decreased.
(3) According to one embodiment of the present invention, the wired & wireless control system can use the original lighting control network as the data bridge path, so the utilization rate of the lighting control network can be increased; in this way, the lighting control network idle for most of the time can be more effectively utilized.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A wired & wireless control system, comprising:
a plurality of control devices, each of the control devices wirelessly transmitting a control signal corresponding to the control device's communication protocol;
a lighting control network, comprising a plurality of lighting devices, wherein the lighting devices are coupled to one another via an internal wiring; each of the lighting device is able to receive the control signal corresponding to the lighting device's communication protocol, and then transmit the control signal to another lighting device via the internal wiring so as to convert the control signal into a conversion signal corresponding to the communication protocol of the lighting device receiving the control signal from the internal wiring; and
a plurality of gateways, each of the gateway being coupled to at least one controlled device and receiving the conversion signal corresponding to the gateway's communication protocol so as to control the at least one controller device.

2. The wired & wireless control system of claim 1, wherein each of the lighting devices comprises a wireless communication module, and each of the lighting devices receives the control signal corresponding to the lighting device's communication protocol.

3. The wired & wireless control system of claim 1, wherein the lighting control network is based on a DALI protocol.

4. The wired & wireless control system of claim 3, wherein each of the lighting devices further comprises a lighting module and a power conversion module; the lighting module is coupled to the power conversion module, and the power conversion module is coupled to the wireless communication module via a plug-and-play interface, and the plug-and-play interface is a USB interface.

5. The wired & wireless control system of claim 4, wherein the communication protocols of the wireless communication modules comprise one or more than one of an Infrared communication protocol, a WIFI communication protocol, a ZigBee communication protocol and a Bluetooth communication protocol.

6. The wired & wireless control system of claim 4, wherein the power conversion module is electrical ballast or a LED driver.

7. The wired & wireless control system of claim 5, wherein the communication protocols of the control devices comprise one or more than one of the Infrared communication protocol, the WIFI communication protocol, the ZigBee communication protocol and the Bluetooth communication protocol.

8. The wired & wireless control system of claim 6, wherein the lighting modules are gas discharging lamps or LED lamps.

9. The wired & wireless control system of claim 7, wherein the communication protocols of the gateways comprise one or more than one of the Infrared communication protocol, the WIFI communication protocol, the ZigBee communication protocol and the Bluetooth communication protocol.

10. A data bridge method using a lighting control network as a data bridge path, wherein the lighting control network comprises a plurality of lighting devices, and the lighting devices are coupled to one another via an internal wiring; the data bridge method comprises the following steps:
wirelessly transmitting a control signal by any one of the control devices, the control signal being corresponding to the control device's communication protocol;
receiving the control signal by one lighting device with the communication protocol corresponding to the communication protocol of the control signal, and transmitting the control signal from the lighting device to another lighting device via the internal wiring so as to convert the control signal into a conversion signal corresponding to the communication protocol of the light device receiving the control signal from the internal wiring; and
receiving the conversion signal by one of a plurality of gateways corresponding to the communication protocol of the conversion signal so as to control at least one controlled device.

11. The data bridge method of claim 10, wherein each of the lighting devices comprises a wireless communication module, and each of the lighting devices receives the control signal corresponding to the lighting device's communication protocol.

12. The data bridge method of claim 11, wherein each of the lighting devices further comprises a lighting module and a power conversion module; the lighting module is coupled to the power conversion module, and the power conversion module is coupled to the wireless communication module via a plug-and-play interface, and the plug-and-play interface is a USB interface.

13. The data bridge method of claim 12, wherein the communication protocols of the wireless communication modules comprise one or more than one of an Infrared communication protocol, a WIFI communication protocol, a ZigBee communication protocol and a Bluetooth communication protocol.

14. The data bridge method of claim 13, wherein the communication protocols of the control devices comprise one or more than one of the Infrared communication protocol, the WIFI communication protocol, the ZigBee communication protocol and the Bluetooth communication protocol.

15. The data bridge method of claim 14, wherein the communication protocols of the gateways comprise one or more than one of the Infrared communication protocol, the WIFI communication protocol, the ZigBee communication protocol and the Bluetooth communication protocol.
